# EUROPEAN PATENT SPECIFICATION

(11) **EP 2 474 221 B1**
(45) Date of publication and mention of the grant of the patent: **25.03.2015**
(21) Application number: 11155700.5
(22) Date of filing: 23.02.2011
(51) Int. Cl.: A01G 1/04

(54) **Medium for cultivating truffles, truffle mycelium, and truffle fruiting body**
Medium zur Kultivierung von Trüffeln, Trüffelmycelium und Trüffelfruchtkörper
Milieu de culture de truffes, mycélium de truffes et corps de fructification de truffes

(30) Priority: 07.01.2011 JP 2011002460
(43) Date of publication of application: 11.07.2012
(73) Proprietor: Niigata Beer Corporation, Niigata 953-0012 (JP)
(72) Inventor: Usami, Ken, Niigata 953-0012 (JP)
(74) Representative: Cabinet Plasseraud

(56) References cited:
- EP-A2- 0 590 256
- GB-A- 1 502 238
- JP-A- 10 127 164
- KR-A- 20080 009 909

## Description

### [Technical Field]

This invention relates to a medium for cultivating truffles, and more precisely, to a medium, which allows to produce the truffle mycelium and truffle fruiting body with the high reactive oxygen scavenging capacity.

### [Background Art]

The reactive oxygen has been considered as one of the contributory factors for aging and diseases. In recent years, it is believed to be desirable to restrain or eliminate it. The known components to remove the reactive oxygen are, for example, β-glucan polysaccharide, vitamin C, Vitamin E, Saponin, Catechin, Flavonoid, Tannin, β -carotene, Polyphenol, Anthocyanin, etc.

Apropos, it is known that mushrooms have various bioactive properties and it is also known that mushrooms have an effect to moderate damages caused to a living body by life circumstance and natural environment.

For example, Kabanoanatake contains enzyme such as Superoxide Dismutase (SOD), which is known to be effective in the treatment and prevention of dementia, hepatitis, diabetes, cerebral vascular disorder, cardiac infarction and cancer, potentially caused by the a slight amount of the reactive oxygen generated in the process of energetic metabolism of the living body.

Also, truffles are known to be effective on certain conditions such as the improvement of immunity and hyperlipidemia. The well-known truffles are Perigord truffles from France (also known as black truffle, scientific name: Tuber melanosporum), and the Italian white truffles (scientific name: Tuber magnatum pico). In Japan, Kuroamimeseiyoushouro (scientific name: Tuber aestivum) is also widely known.

In addition, Patent Document 1 discloses an artificial cultivation method of white truffle. Patent Document 2 discloses that the extracted substance (truffle extract) from truffle mycelium and fruiting body, using a solvent such as ethanol, is effective in reducing the aging of the organism. Patent Document 3 discloses that a truffle extract is effective in the prevention of the immunological deterioration as well as moisturizing of the skin. Patent Document 4 discloses that truffle extracts are effective as secretagogue of immunoglobulin A (IgA), to improve the immunity balance and the anti-hyperlipidemia effect.

As illustrated in the aforementioned patent documents 2, 3 and 4, truffes can be, not only consumed as delicacies, but also can be potentially provided as health promoting food, which are used for prevention of various diseases as well as for protection and improvement of bodily functions.

The methods disclosed in Patent Documents 2 and 3 are merely drawn to the use of conventionally manufactured and commercially available fruiting bodies of truffles as basic ingredient. However, those documents are not drawn to the improvement or further study of the traditional truffle mycelium and medium (also known as "culture medium") used for producing the truffle fruiting body.

Note that the typical truffle medium is prepared with a mixture of wood sawdust (wood debris or wood chips), rice bran and other nutrients as, for example, in Patent Documents 5 and 6. Then a hole is made in the medium and a spawn (seed) of the fungus is injected in the culture medium and the medium is kept in the low temperature for cultivation. After about one week, the white fluffy fungal filament starts to grow in the entire medium. In one to two months, the fungal filaments are entirely infested (i.e. the truffle mycelium is formed). In three to four months, 2 to 3 cm of the truffle fruiting bodies are formed on the surface of the medium covered by the white aerial hypha.

Since the truffle fruiting bodies, cultivated as described above and collected from the culture medium, do not include an inedible element or the sawdust, it can be offered to the market as food delicacy. However, it is not possible to extract directly the truffle mycelium from the medium and isolate the truffle mycelium completely from the inedible element such as sawdust in the middle of the cultivation process. Hence, the use of the mycelium as a basic ingredient for health promoting food requires subsequent post-processing.

Although truffles and truffle extracts by the conventional method may have reactive oxygen scavenging capacity (antioxidative activity), improvements are still required. Furthermore, as for the commonly used medium (culture medium), there is no evidence that the medium itself has the remarkable antioxidative capacity.

In Patent Document 7, a citrus peel by-product is added, for its antioxidant properties, to a mushroom culture medium.

### [Previous Scientific Documents]

### [Patent Document]

| | |
|---|---|
| [Patent Document 1] | JP Patent Publication (unexamined) No. 10-127164 |
| [Patent Document 2] | JP Patent Publication (unexamined) No. 2002-249438 |
| [Patent Document 3] | JP Patent Publication (unexamined) No. 2006-69969 |
| [Patent Document 4] | JP Patent Publication (unexamined) No. 2010-222265 |
| [Patent Document 5] | EP Patent Publication No. 0 590 256 A2 |
| [Patent Document 6] | GB Patent Publication No. 1 502 238 A |
| [Patent Document 7] | KR Patent Publication No. 2008 000 9909 A |

### [Non-Patent Documents]

Non-Patent Document 1: C. Folch-Cano and three other authors, "Antioxidant activity of inclusion complexes of tea catechins with β-cyclodextrins by ORAC assays ", Food Research International, 43, (2010), 2039-2044

### [SUMMARY OF THE INVENTION]

### [Purposes of the invention]

The present invention is developed in a view of the aforementioned circumstances, and its purpose is to provide truffles (truffle fruiting body) having high antioxidative capacity.

Another purpose of the present invention is to provide a medium for producing truffles and truffle mycelium having high antioxidative capacity.

After a diligent study, the inventor discovered that, when an edible ingredient having high Oxygen Radical Absorbance Capacity (ORAC), or high antioxidative potency, is used as an ingredient of the medium replacing the sawdust used solely in the conventional method, not only the medium but also the injected spawn (seeds) of truffles absorbing said ingredient as well as the truffle mycelium and truffle fruiting body cultured on said medium drastically increase their reactive oxygen scavenging capacity comparing to the existing truffles.

### [Procedures to realize the purpose]

More specifically, this invention consists of, for example, the following characteristics and components.
The present invention relates to a medium for cultivating truffles, said medium comprising a mixture of at least one carbohydrate source selected from the group consisting of rice bran, wheat bran, and glucose, and at least one edible ingredient selected from the group consisting of burdock, nuts and berries, wherein the weight ratio of said edible ingredient to said carbohydrate source is comprised between 0.5 and 5, preferarbly between 1 and 2.
Preferably, said edible ingredient of the medium for cultivating truffles according to the invention is a granulated burdock.
Preferably, said medium is in a liquid state.
The present invention also relates to a method for producing a truffle mycelium or a truffle fruiting body, comprising a step of injecting a truffle seed to the medium according to the invention. The present invention also refers to a truffle mycelium or a truffle fruiting body obtained according to the process of the invention.
The present invention also concerns the use of a truffle mycelium or a truffle fruiting body obtained according to the invention as an antioxidant.
The present invention finally concerns a composition comprising a truffle mycelium or a truffle fruiting body according to the invention. Preferably, said composition is a food product, preferably a health promoting food product.
Preferably, said food product is a drink, a cake, a dairy product like a yogurt, a snack or a biscuit.

Here, as the aforementioned edible ingredients, at least one of burdock, nuts (e.g., walnuts), and berry (e.g., blueberry) are preferred. It is well known that the ORAC values are very high in all of these fruits and vegetables.

Additionally, with the present invention, one of the traditional ingredients, sawdust, is not at all employed and the edible ingredients have become an alternative to the sawdust. This enables the cultivated truffle mycelium to be also edible. Therefore, the range of utilization of the truffle mycelium can be extended significantly.

Considering the costs of the basic ingredients, it is preferable that they contain burdock. As for increasing the effect of the invention mentioned in the followings, it is desirable to use granulated burdock having for example grain diameter of 1 mm to 10 mm. When the grain size is below than 1 mm in diameter, the medium using such a small size of burdock grains becomes very close to powdery conditions and has poor ventilation. Therefore it is not suitable for cultivating the mycelium. On the other hand, when the grain size is over 10 mm in diameter, burdock does not mix well with the carbohydrate source and it fails to develop an adequate medium.

Moreover, in mixing the carbohydrate source such as rice bran and the edible ingredient, it is preferable to maintain the edible ingredient to be mixed with a weight ratio of 0.5 to 5 to the carbohydrate source (that is, the weight of the carbohydrate source as 1). Also, even more preferably, the edible ingredient is to be mixed with a weight ratio of 1 to 2. If the weight ratio of the edible ingredient is less than 0.5, it is undesirable as it causes nutritional disorder in the process of truffle cultivation. On the contrary, if the weight ratio of the edible ingredients would be more than 5, it is also undesirable as it prolongs the incubation time of truffles to unacceptable level.

The kinds of truffles, which may be applied to the present invention, are not specially limited to any specific species but the seeds of the Black Truffle (scientific name: Tuber melanosporum), the seeds of the White Truffle (scientific name: Tuber magnatum pico) and the seeds of Kuroamimeseiyoushouro (scientific name: Tuber aestivum) may be listed, for example.

### [Effect of the Invention]

According to the present invention, it is possible and quite easy to cultivate truffle mycelium and truffle fruiting body having very high reactive oxygen scavenging capacity.

### [BRIEF DESCRIPTION OF THE DRAWING]

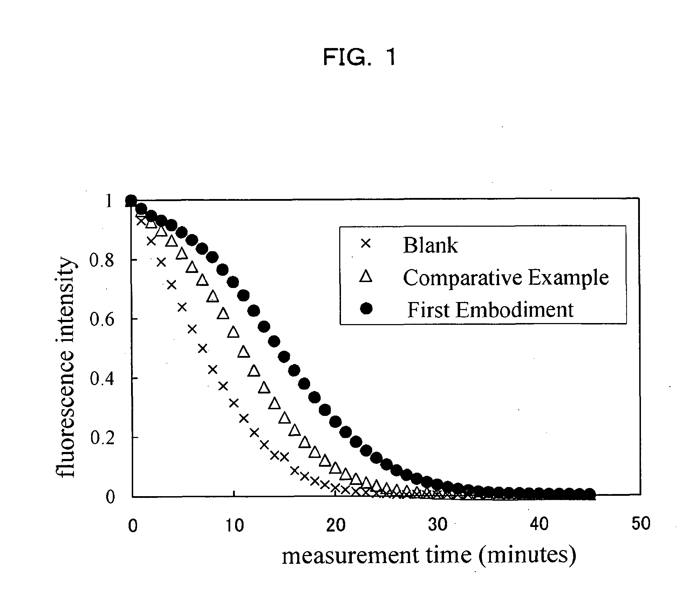

Figure 1 is a graph demonstrating the decreased fluorescence intensity of truffle culture cultivated by the present invention, monitored by the analysis of ORAC method.

### [DETAILED DESCRIPTION OF THE EMBODIMENTS FOR IMPLEMENTING THE INVENTION]

At first, we will explain about the medium of the present invention and the culture cultivated by injecting the truffle seeds into such a medium.

### (First embodiment of the medium and culture)

As a condition of the first embodiment of the present invention, the medium was produced by mixing 0.5 kg of rice bran and 0.5 kg of burdock, then injected 10 g of truffle seed and mixed them more, and transferred this medium in a sterile container and stored the container in a clean bench under sterile environment at a temperature of 20°C for 60 days. After 60 days of incubation, 1 g of the culture was collected in a 20 ml test tube with and added 10 ml of methanol 80% and extracted them by heating on a hot plat up to 100 to 105°C for 30 minutes. The extracted liquid was removed from the test tube and maintained in a centrifugal separation process for 10 minutes under 8000 rpm to collect the supernatant liquid. The collected supernatant was stored frozen at minus 20°C.

Furthermore, for the evaluation of the ORAC method as mentioned below, we have adjusted the concentration of the aforementioned supernatants, enabling the proper evaluation of this analytical method. More specifically, we collected the 10 µl of the refrigerated supernatant and heated to 25°C and diluted it by adding 999 µl of the methanol 80% solution.

### (The medium and culture of second embodiment)

As a condition of the second embodiment of the present invention, the only condition, which was different from that of the first embodiment, is the weight ratio of the ingredients to prepare the medium. The quantities were changed to 0.5 kg of rice bran and 1.0 kg of burdock. Since the second embodiment is conducted as the first embodiment except the weight ratio, the explanation about the other same conditions is omitted.

### (The medium and culture of Comparative examples)

In order to verify the function effect of the truffles culture of the present invention, truffle culture was carried out using conventional method as a comparative example. Specifically, the medium of the comparative example was obtained by mixing 0.5 kg of rice bran with 1.0 kg of sawdust. Except the ingredients, the comparative example was prepared in the same way as the first practical example, thus, the explanation is omitted.

### (Affirmation of the advantageous effects on Oxygen Radical Absorbance Capacity ORAC)

ORAC (Oxygen Radical Absorbance Capacity) is the index which demonstrates the antioxidative potency, and was developed by the researchers of the U.S. Department of Agriculture (USDA) and the National Institute on Aging in 1992. This ORAC assay is excellent especially for the analysis of antioxidative capacity in foods. The ORAC database based on such an analysis offers a wide range of collection from natural ingredients such as vegetables and fruits to the processed foods.

### (The principle of ORAC analysis)

The measurement of the fluorescence intensity of the fluorescent substances disassembled by a certain amount of generated active oxygen species makes a diminishing curve over time. When the antioxidative substance coexists to this reaction system, it reduces the declining speed of fluorescence intensity.
Based on this measurement principle, the difference (called net AUC) between the Area Under the Curve (AUC) of the fluorescence intensity in the presence of the specimen material (or the reference material) and the AUC without the presence of the specimen material (the blank condition) was calculated. Concerning the net AUC of the specimen material, the relative value to the net AUC of the known density of the reference material is calculated (Trolox: registered trade mark). The Oxygen Radical Absorbance Capacity of the specimen material is established by the Trolox density converted based on the relative value. The unit of net AUC is µmol TE/g.

The aforementioned evaluation was conducted for the first and second embodiments and the comparative example. For this evaluation, 1 mM of Trolox solution is prepared as the reference material and Trolox solutions, whose concentration gradually are modified by 80 percent methanol from the range of 0.782 µM to 50 µM, are also prepared.

The green dye, flourescein is used as the fluorescent pigment for the aforementioned measurement and 2,2'-azo-bis(2-amidinopropane)dihydrochloride AAPH is used as the reactive oxygen scavenging reaction indicator. To monitor the fluorescence intensity, a black plate with 96 halls for holding test tubes (trade name: OptiPlate-96, PerkinElmer Inc.), and Multi Label Reader (trade name ARVOX, PerkinElmer Inc.) are used as the analytical equipments. Furthermore, we referred to the aforementioned non-patent Document 1 for the procedures of this evaluation.

In Figure 1, it is demonstrated that the monitoring results of the decline of fluorescence intensity of the blank condition, the comparative example as well as the first embodiment of the present invention. Additionally, in Table 1 and Table 2, the analytical results (AUC and net AUC) of the blank condition, the reference material in each concentration (Trolox solution), the comparative example and the first embodiment of the present invention. As mentioned, since the truffle culture of the comparative example and the first embodiment is 1000 times more diluted by ethanol for this evaluation, we estimate that the net AUC (Antioxidative potency) of actual truffle culture will be 1000 times more than the result of this evaluation.

**[Table 1]**

| | Blank | Trolox No.1 | Trolox No.2 | Trolox No.3 | Trolox No.4 | Trolox No.5 | Trolox No.6 | Trolox No.7 |
|---|---|---|---|---|---|---|---|---|
| Trolox Concentration | 0 | 0.782 | 1.563 | 3.125 | 6.25 | 12.5 | 25 | 50 |
| AUC | 7.542 | 9.228 | 10.6 | 12.37 | 15.03 | 18.74 | 23.59 | 28 |
| net AUC | 0 | 1.686 | 3.056 | 4.827 | 7.488 | 11.19 | 16.05 | 20.46 |

**[Table 2]**

| | Comparative Example | First Embodiment |
|---|---|---|
| AUC | 9.844 | 14.05 |
| net AUC | 2.3 | 6.5 |

Based on the results comparing to the truffle culture incubated in the conventional method as in the comparative example, the culture prepared by the present invention demonstrates the significant high antioxidative potency.

More specifically, the culture incubated the medium of the first embodiment with the weight ratio of 1:1 of rice bran and burdock respectively, demonstrated approximately three times greater antioxidative potency (net AUC) than that of the comparative example.

Furthermore, although it is not illustrated in the figure, in the case of the culture cultivated in the medium with the weight ratio of 2:1 of rice bran and burdock respectively, as stated in the second embodiment, it also demonstrated a higher antioxidative potency than that of the comparative example.

In the present invention, the medium for cultivating truffles generally exists in a solid state, but it may exist in a liquid state. In that case, both the medium and the truffle culture are in a liquid state. For example, the liquid medium is poured into a tank. Then, the seed is added into the medium resulting in a liquid truffle culture in the tank. Compared to the solid medium, which is not poured into a tank and usually is exposed to outside environment (not clean and not pure), making the medium in a liquid state and keeping it in a tank results in a purer truffle culture without contamination. Thus, the medium in liquid state allows cultivating a purer liquid truffle culture in a tank. Said truffle culture may be used as a basic ingredient for processing the health promoting foods. For example, the medium used in liquid state may comprise a mixture of a liquid burdock extract made by an ethanol extraction or a thermal extraction, and rice bran, with the preferred weight ratio, and may be poured in a tank. Then, a seed of the fungus may be injected into the liquid medium in the tank.

### [Industrial Applicability]

As noted above, truffles will not only be considered as a food delicacy, they may also be used as a useful functional food ingredients. The truffle mycelium and fruiting body of the present invention, compared to the ones available at the today's market, may be considered as one of the ingredients for functional foods or more value added ingredients, since they possess already a high antioxidative potency. Consequently, the present invention has a very high value of industrial application.

## Claims

1. A medium for cultivating truffles, said medium comprising a mixture of at least one carbohydrate source selected from the group consisting of rice bran, wheat bran, and glucose, **characterized in that** it further comprises at least one edible ingredient selected from the group consisting of burdock, nuts, and berries, wherein the weight ratio of said edible ingredient to said carbohydrate source is comprised between 0.5 and 5.

2. The medium for cultivating truffles according to claim 1, wherein said weight ratio of said edible ingredient to said carbohydrate source is comprised between 1 and 2.

3. The medium for cultivating truffles according to claim 1, wherein said edible ingredient is a granulated burdock.

4. The medium for cultivating truffles according to claim 3, wherein said granulated burdock has a grain diameter comprised between 1 mm and 10 mm.

5. The medium for cultivating truffles according to any one of claim 1 or 2, wherein said medium is in a liquid state.

6. A method for producing a truffle mycelium comprising a step of injecting a truffle seed to the medium according to one of claims 1 to 5.

7. A method for producing a truffle fruiting body comprising a step of injecting a truffle seed to the medium according to one of claims 1 to 5.

8. Truffle mycelium obtained according to claim 6 or truffle fruiting body obtained according to claim 7.

9. Use of a truffle mycelium or a truffle fruiting body according to claim 8 as an antioxidant.

10. Composition, preferably food product, comprising a truffle mycelium or a truffle fruiting body according to claim 8.

## Patentansprüche

1. Medium zum Kultivieren von Trüffeln, wobei das Medium ein Gemisch aus mindestens einer Kohlenhydratquelle, ausgewählt aus der Gruppe, bestehend aus Reiskleie, Weizenkleie und Glucose umfasst, **dadurch gekennzeichnet, dass** es weiterhin mindestens einen verzehrbaren Bestandteil, ausgewählt aus der Gruppe, bestehend aus Klette, Nüssen und Beeren, umfasst, worin das Gewichtsverhältnis des verzehrbaren Bestandteils zu der Kohlenhydratquelle zwischen 0,5 und 5 ist.

2. Medium zum Kultivieren von Trüffeln nach Anspruch 1, worin das Gewichtsverhältnis des verzehrbaren Bestandteils zu der Kohlenhydratquelle zwischen 1 und 2 umfasst.

3. Medium zum Kultivieren von Trüffeln nach Anspruch 1, worin der verzehrbare Bestandteil eine granulierte Klette ist.

4. Medium zum Kultivieren von Trüffeln nach Anspruch 3, worin die granulierte Klette einen Korndurchmesser hat, umfassend zwischen 1 mm und 10 mm.

5. Medium zum Kultivieren von Trüffeln nach einem der Ansprüche 1 oder 2, worin das Medium in einem flüssigen Zustand ist.

6. Verfahren zum Herstellen eines Trüffelmyzeliums, umfassend einen Schritt des Einbringen eines Trüffelsamens in das Medium nach einem der Ansprüche 1 bis 5.

7. Verfahren zum Herstellen eines Trüffelfruchtkörpers, umfassend einen Schritt des Einbringens eines Trüffelsamens in das Medium nach einem der Ansprüche 1 bis 5.

8. Trüffelmyzelium, erhältlich nach Anspruch 6, oder Trüffelfruchtkörper, erhalten nach Anspruch 7.

9. Verwendung eines Trüffelmyzeliums oder eines Trüffelfruchtkörpers nach Anspruch 8 als ein Antioxidans.

10. Zusammensetzung, vorzugsweise ein Nahrungsprodukt, umfassend ein Trüffelmyzelium oder einen Trüffelfruchtkörper nach Anspruch 8.

## Revendications

1. Milieu de culture de truffes, ledit milieu comprenant un mélange d'au moins une source de glucide choisie dans le groupe consistant en le son de riz, le son de blé et le glucose, **caractérisé en ce qu'**il comprend en outre au moins un ingrédient comestible choisi dans le groupe consistant en la bardane, les noix et les baies, dans lequel le rapport en poids dudit ingrédient comestible à ladite source de glucide est compris entre 0,5 et 5.

2. Milieu de culture de truffes selon la revendication 1, dans lequel le rapport en poids dudit ingrédient comestible à ladite source de glucide est compris entre 1 et 2.

3. Milieu de culture de truffes selon la revendication 1, dans lequel ledit ingrédient comestible est une bardane granulée.

4. Milieu de culture de truffes selon la revendication 3, dans lequel ladite bardane granulée a un diamètre de grain compris entre 1 mm et 10 mm.

5. Milieu de culture de truffes selon l'une quelconque des revendications 1 ou 2, dans lequel ledit milieu est à l'état liquide.

6. Procédé de production d'un mycélium de truffe comprenant une étape d'injection d'une semence de truffe dans le milieu selon l'une des revendications 1 à 5.

7. Procédé de production d'un corps de fructification de truffe comprenant une étape d'injection d'une semence de truffe dans le milieu selon l'une quelconque des revendications 1 à 5.

8. Mycélium de truffe obtenu selon la revendication 6 ou corps de fructification de truffe obtenu selon la revendication 7.

9. Utilisation d'un mycélium de truffe ou d'un corps de fructification de truffe selon la revendication 8 comme antioxydant.

10. Composition, de préférence produit alimentaire, comprenant un mycélium de truffe ou un corps de fructification de truffe selon la revendication 8.
